# EUROPÄISCHE PATENTANMELDUNG

(11) **EP 0 869 042 A1**
(43) Veröffentlichungstag der Anmeldung: **07.10.1998**
(21) Anmeldenummer: 98100973.1
(22) Anmeldetag: 21.01.1998
(51) Int. Cl.: B60S 1/04, B60S 1/38

(54) **Wischeranordnung**

(30) Priorität: 03.04.1997 DE 19713724
(71) Anmelder: Volkswagen Aktiengesellschaft, 38436 Wolfsburg (DE)
(72) Erfinder: Raav, Stefan, Dipl.-Ing., 38104 Braunschweig (DE); Dekena, Marko, Dipl.-Ing., 38100 Braunschweig (DE); Herbst, Carsten, Dipl.-Ing., 14195 Berlin (DE); Kostka, Jürgen, Dipl.-Ing., 4620 Differdange (LU); Busch, Jörn, 38165 Lehre (DE); Schulz, Bodo, Dipl.-Ing., 38536 Meinersen (DE); Rüdiger, Reinhard, Dipl.-Ing., 31226 Peine (DE)

(57) **Zusammenfassung**

Die vorliegende Erfindung betrifft eine Wischeranordnung (100, 200) für eine Scheibe (16), insbesondere für eine Windschutzscheibe (16) eines Kraftfahrzeugs, mit einem Wischerarm (10) und einem an dem Wischerarm (10) angeordneten Wischergummi (12). Hierzu sind an der Wischeranordnung (100, 200) Mittel (18, 26) vorgesehen sind, welche eine Schwenkbewegung des gesamten Wischergummis (12) bzgl. des Wischerarms (10) um eine Achse (30) parallel zur Längsrichtung des Wischerarms (10) und/oder eine Relativbewegung des Wischergummis (12) aus einer Wischebene heraus ausführen.

## Beschreibung

Die Erfindung betrifft eine Wischeranordnung für eine Scheibe, insbesondere für eine Windschutzscheibe eines Kraftfahrzeugs, mit einem Wischerarm und einem an dem Wischerarm angeordneten Wischergummi.

Für ein optimales Wischbild eines Scheibenwischers über einer Scheibe, insbesondere einer Kraftfahrzeugscheibe, ist eine möglichst gleichförmige Bewegung des Wischblattes erforderlich. Störungen der gleichförmigen Bewegung führen zu einer ruckartigen Wischbewegung, die hinsichtlich der Wischqualität und auch einer Geräuschentwicklung sehr störend ist. Der unharmonische, ruckartige Lauf des Wischerblattes kann Folge dreier unterschiedlicher Schwingungen sein. Dies sind zum einen ruckartige Schwingungen beim Lauf des Scheibenwischerblattes über die Scheibe, zum zweiten Relativbewegungen des Wischerblattes zum Wischerarm (Drehung um den Wischblattaufhängepunkt) und zum dritten Springen des Wischerblattes vertikal zur Scheibe beim Kippen der Wischerlippe bei einer Bewegungsumkehr des Wischerblattes. Das "Rattern" bzw. "Rubbein" des Wischergummis wird insbesondere bei verschmutzten Scheiben und beim Übergang von nasser zu abgetrockneter Scheibe ausgelöst.

Aus der DE 195 47 198 A1 ist ein Scheibenwischerblatt für Kraftfahrzeuge bekannt, bei dem verbesserte Mittel zum Sichern des Wischergummis in Längsrichtung in der Nähe des Mittelteils des Wischergummis vorgesehen sind.

Aus der DE 195 38 424 A1 ist eine Wischervorrichtung für ein Kraftfahrzeug bekannt, die beim Auftreten ungewöhnlicher Belastungen diese absorbiert, so daß die Wischerfunktion des Wischerblattes nicht unterbrochen wird. Hierzu ist zwischen einer Antriebswelle und Schwenkhebeln der Wischerarme eine elastische Gummibüchse an einem kraftübertragenden Teil angeordnet.

Die DE 195 08 738 A1 offenbart einen Wischer zum Wischen von Kraftfahrzeug-Fensterscheiben. Die Wischervorrichtung enthält eine Wischerblattstruktur, die einen Lippenkontaktwinkel zwischen der Windschutzscheibe und einer Seitenwand der Lippe während des Wischvorgangs in einem vorgegebenen Winkelbereich aufrechterhält. Bei einem durch äußere Einflüsse verhärteten Gummi des Wischerblattes ist jedoch dieser Mechanismus unwirksam.

Die DE 31 19 176 C2 offenbart eine Vorrichtung zum Verbinden eines Windschutzscheibenwischerarmes mit einem Windschutzscheiben-Wischerblatt, wobei durch eine besondere Ausgestaltung dieser Vorrichtung ein Einsetzen des Wischerblattes unter einem spitzen Winkel relativ zur Längserstreckung des Wischerarmes ermöglichen soll.

Aus der DE 39 03 305 C2 ist eine Scheibenwischeinrichtung und aus der DE 195 24 108 A1 ist ein Scheibenwischergummi bekannt, bei denen ein Wischerblatt derart ausgebildet ist, daß eine Schwenklage der Wischlippe gegenüber dem Haltekörper einstellbar ist. Wiederum ist dieser Mechanismus auf die Elastizität des Wischerblatt-Materials beschränkt und bei beispielsweise temperaturbedingter Verhärtung des Wischblatt-Materials unwirksam.

Alle derartigen Systeme haben den Nachteil, daß ein Anhatten der Wischerlippe des Wischerblattes durch Eisbildung auf der Scheibe bei tiefen Temperaturen nicht wirksam verhindert werden kann. Ferner kann es durch Kälte- und/oder Wärmeeinflüsse zu einer Verhärtung des auf der Scheibe in Ruhestellung des Wischerarms angedrückten und entsprechend verformten Wischergummis kommen. Dadurch liegt die Wischerlippe des starr in eine Vorzugsrichtung verformten Wischergummis beim Wischvorgang nicht mehr in einem optimalen Winkel auf der Scheibe auf und es kommt zu dem allseits bekannten "Rattern" bzw. "Rubbeln" der Wischerlippe auf der Scheibe.

Der vorliegenden Erfindung liegt daher die Aufgabe zugrunde, eine Wischeranordnung der obengenannten Art zur Verfügung zu stellen, wobei die obengenannten Nachteile überwunden werden und auch im Betrieb bei extremen Temperaturen sowohl im höheren als auch niederen Temperaturbereich eine ausreichende Wischerfunktion zuverlässig erhalten bleibt.

Diese Aufgabe wird erfindungsgemäß durch eine Wischeranordnung der o. g. Art mit den in Anspruch 1 gekennzeichneten Merkmalen gelöst.

Dazu ist es erfindungsgemäß vorgesehen, daß an der Wischeranordnung Mittel vorgesehen sind, welche eine Schwenkbewegung des gesamten Wischergummis bzgl. des Wischerarms um eine Achse parallel zur Längsrichtung des Wischerarms und/oder eine Relativbewegung des Wischergummis aus einer Wischebene heraus ausführen.

Dies hat den Vorteil, daß ein Rubbeln des Wischers auf der Windschutzscheibe auch bei extremen Temperaturen und bleibende Deformationen des Wischergummis und dessen Festfrieren auf der Scheibe verhindert ist. Ferner stellt die erfindungsgemäße Wischeranordnung sicher, daß der Winkel zwischen Wischerlippen und Scheibe in Wischrichtung immer kleiner 90 Grad ist, somit ist ein Rubbeln wirksam unterbunden ist.

In einer besonders vorteilhatten Ausführungsform ist das Mittel für die Schwenkbewegung eine im Wischerarm drehbar gelagerte Walze, an welcher der Wischergummi starr bzgl. der Walze befestigt ist.

Schwenkbewegungen der Wischerlippe in einen optimalen Winkel zur Scheibe werden unabhängig vom Elastizitätszustand des Wischergummi-Materials dadurch möglich, daß die Walze um eine Achse im wesentlichen parallel zur Längserstreckung des Wischerarms drehbar ist.

Zweckmäßigerweise ist der Wischergummi in einer Erhebung der Walze befestigt. Dabei wird ein optimaler Winkel zwischen Wischerlippe und Scheibe dadurch erreicht, daß seitlich zu der Erhebung der Walze am Wischerarm Anschläge vorgesehen sind, welche die Drehung der Walze auf einen vorbestimmten Winkel begrenzen.

Zweckmäßigerweise wird der vorbestimmte Winkel derart gewählt, daß ein Winkel zwischen Wischerblattlippe und Scheibe während eines Wischvorgangs immer kleiner 90 Grad ist.

Ein einfacher und kostengünstiger Aufbau ergibt sich dadurch, daß in dem Wischerarm eine hohlzylindrische Ausnehmung zur Aufnahme der Walze vorgesehen ist.

In einer weiteren besonders bevorzugten Ausführungsform ist das Mittel für die Relativbewegung wenigstens ein ein- und ausfahrbarer Stift, der beim Ausfahren einen zugeordneten Wischerarm derart bewegt, daß sich der Wischergummi von der Scheibe abhebt.

In vorteilhafter Weise ist dabei der Stift in einem Karosserieteil benachbart zur Scheibe eingelassen.

Zweckmäßigerweise ist der Stift derart angeordnet, daß er in ausgefahrenem Zustand einen zugeordneten Wischerarm in dessen Ruhestellung anhebt. Dies verhindert beispielsweise ein Anfrieren des Wischergummis an der Scheibe bei kaltem, winterlichem Wetter.

Zweckmäßigerweise ist für jeden Wischerarm ein eigener ein- und ausfahrbarer Stift vorgesehen.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine erste bevorzugte Ausführungsform einer erfindungsgemäßen Wischeranordnung in Schnittansicht,
- Fig. 2: die erste bevorzugte Ausführungsform der erfindungsgemäßen Wischeranordnung von Fig. 1 in Aufsicht und
- Fig. 3: eine zweite bevorzugte Ausführungsform einer erfindungsgemäßen Wischeranordnung in Schnittansicht.

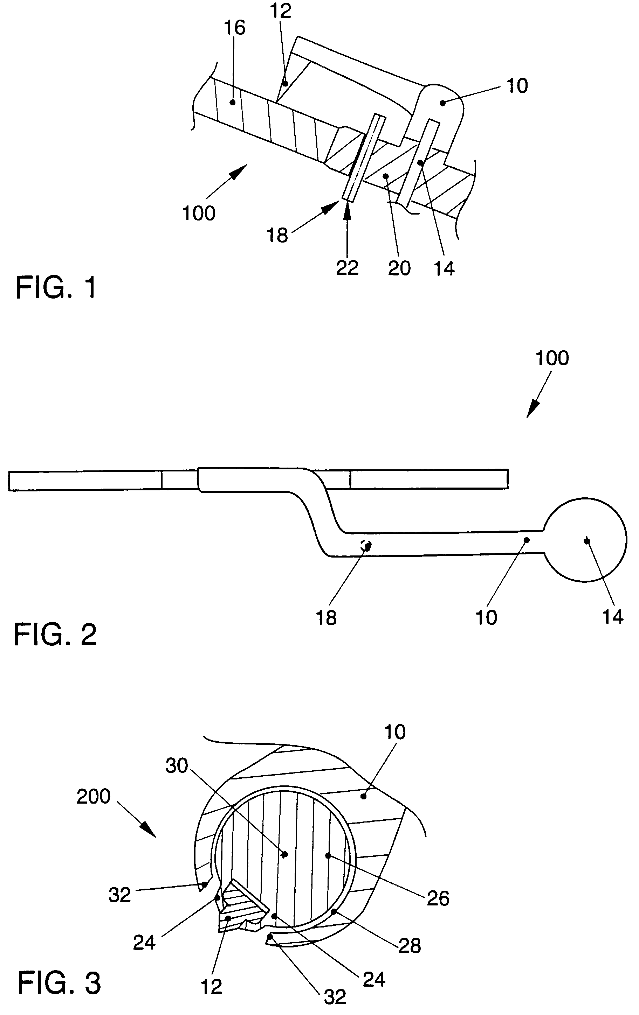

Figur 1 zeigt eine erste bevorzugte Ausführungsform einer erfindungsgemäßen Wischeranordnung 100 mit einem Wischerarm 10 und einem Wischergummi 12. Der Wischerarm 10 ist über eine Welle 14 drehbar derart angetrieben, daß der Wischergummi 12 über eine Scheibe 16 wischt, wobei die Scheibe im wesentlichen eine Wischebene definiert.

Ein Stift 18 ist in der Karosserie 20 ein- und ausfahrbar angeordnet. In Fig. 1 ist er in eingefahrenem Zustand dargestellt. Beim Ausfahren des Stiftes 18 in Pfeilrichtung 22 stößt der Stift 10 an den in seiner Ruhestellung befindlichen Wischerarm 10 und hebt so den Wischergummi 12 von der Scheibe 16 ab. Dies erfolgt vorzugsweise beim Abstellen des Fahrzeuges. Ein anfrieren des Gummis an der Scheine ist so nicht mehr möglich.

Auch ein Aushärten des Gummis 16 bei starker Sonnen- bzw. Wärmeeinwirkung in einer Vorzugsstellung, wodurch sich bei entgegengesetzter späterer Bewegung ein Rubbeln ergeben würde, ist somit wirkungsvoll vermieden.

Fig. 2 zeigt die Anordnung 100 von Fig. 1 in Aufsicht und verdeutlicht, daß der Wischerarm 10 in seiner Ruhestellung einen Austritt des Stiftes 18 überdeckt und so beim Ausfahren des Stiftes 18 angehoben bzw. von der Scheibe weg abgehoben wird. Vor dem Inbetriebsetzen der Wischeranordnung wird vorzugsweise der Stift 18 eingefahren, so daß der Wischergummi 12 auf der Scheibe 16 anliegt und eine gewünschte Wischfunktion ausgeführt werden kann.

Fig. 3 zeigt eine zweite bevorzugte Ausführungsform einer Erfindungsgemäßen Wischeranordnung 200 mit einem Wischerarm 10 und einem Wischergummi 12. Hierbei ist der Wischergummi 12 in einer Erhebung 24 einer Walze 26 angeordnet und bzgl. der Walze 26 starr befestigt. Die Walze 26 ist in einer zylindrischen Ausnehmung 28 in dem Wischerarm 10 drehbar gelagert, so daß der Wischergummi 12 um eine Achse 30 im wesentlichen parallel zur Längsausdehnung des Wischerarmes 10 schwenken kann. Die Achse 30 entspricht im wesentlichen der Längs- bzw. Symmetrieachse der Walze 26.

Diese Schwenkbewegung ist unabhängig vom Elastizitätszustand des Wischergummis 12 immer möglich, so daß in Wischrichtung durch Anschläge 32 immer ein Winkel von kleiner 90 Grad zwischen Wischergummi 12 und Scheibe sichergestellt ist. Auf diese Weise gewährleistet die Relativbewegung der Walze 26 mit Wischergummi 12 innerhalb der Aufnahme 28 eine rubbelfreie Führung des Wischergummis 12 auf der Scheibe.

Die Kombination von Walze 26 mit Aufnahme 28 im Wischerarm 10 wirkt somit als Antirubbelgelenk für die Wischeranordnung. Da die Schwenkbewegung des Wischergummis 12 nicht ausschließlich aus dessen Elastizität abgeleitet wird, ist diese Funktion unabhängig von Temperatur- oder sonstigen äußeren Einflüssen.

### BEZUGSZEICHENLISTE

- 100, 200: Wischeranordnung
- 10: Wischerarm
- 12: Wischergummi
- 14: Welle
- 16: Scheibe
- 18: Stift
- 20: Karosserie
- 22: Pfeilrichtung
- 24: Erhebung
- 26: Walze
- 28: zylindrischen Ausnehmung
- 30: Achse
- 32: Anschläge

## Patentansprüche

1. Wischeranordnung (100, 200) für eine Scheibe (16), insbesondere für eine Windschutzscheibe (16) eines Kraftfahrzeugs, mit einem Wischerarm (10) und einem an dem Wischerarm (10) angeordneten Wischergummi (12),
dadurch gekennzeichnet, daß
an der Wischeranordnung (100, 200) Mittel (18, 26) vorgesehen sind, welche eine Schwenkbewegung des gesamten Wischergummis (12) bzgl. des Wischerarms (10) um eine Achse (30) parallel zur Längsrichtung des Wischerarms (10) und/oder eine Relativbewegung des Wischergummis (12) aus einer Wischebene heraus ausführen.

2. Wischeranordnung (100) nach Anspruch 1,
dadurch gekennzeichnet, daß
das Mittel für die Schwenkbewegung eine im Wischerarm (10) drehbar gelagerte Walze (26) ist, an welcher der Wischergummi (12) starr bzgl. der Walze (26) befestigt ist.

3. Wischeranordnung (100) nach Anspruch 2,
dadurch gekennzeichnet, daß
die Walze (26) um eine Achse (30) im wesentlichen parallel zur Längserstreckung des Wischerarms (10) drehbar ist.

4. Wischeranordnung (100) nach Anspruch 2 oder 3,
dadurch gekennzeichnet, daß
der Wischergummi (12) in einer Erhebung (24) der Walze (26) befestigt ist.

5. Wischeranordnung (100) nach Anspruch 4,
dadurch gekennzeichnet, daß
seitlich zu der Erhebung (24) der Walze (26) am Wischerarm (10) Anschläge (32) vorgesehen sind, welche die Drehung der Walze (26) auf einen vorbestimmten Winkel begrenzen.

6. Wischeranordnung (100) nach Anspruch 5,
dadurch gekennzeichnet, daß
der vorbestimmte Winkel derart gewählt ist, daß ein Winkel zwischen Wischerblattlippe und Scheibe (16) während eines Wischvorgangs in Wischrichtung immer kleiner 90 Grad ist.

7. Wischeranordnung (100) nach einem der Ansprüche 2 bis 6,
dadurch gekennzeichnet, daß
in dem Wischerarm (10) eine hohlzylindrische Ausnehmung (28) zur Aufnahme der Walze (26) vorgesehen ist.

8. Wischeranordnung (200) nach einem der vorstehenden Ansprüche,
dadurch gekennzeichnet, daß
das Mittel für die Relativbewegung wenigstens ein ein- und ausfahrbarer Stift (18) ist, der beim Ausfahren einen zugeordneten Wischerarm (10) derart bewegt, daß sich der Wischergummi (12) von der Scheibe (16) anhebt.

9. Wischeranordnung (200) nach Anspruch 8,
dadurch gekennzeichnet, daß
der Stift (18) in einem Karosserieteil (20) benachbart zur Scheibe (16) eingelassen ist.

10. Wischeranordnung (200) nach Anspruch 8 oder 9,
dadurch gekennzeichnet, daß
der Stift (18) derart angeordnet ist, daß er in ausgefahrenem Zustand einen zugeordneten Wischerarm (10) in dessen Ruhestellung anhebt.

11. Wischeranordnung (200) nach einem der Ansprüche 8 bis 10,
dadurch gekennzeichnet, daß
für jeden Wischerarm (10) ein eigener ein- und ausfahrbarer Stift (18) vorgesehen ist.
